# FASCICULE DE BREVET EUROPEEN

(11) **EP 0 724 955 B1**
(45) Date de publication et mention de la délivrance du brevet: **08.03.2000**
(21) Numéro de dépôt: 96400189.5
(22) Date de dépôt: 26.01.1996
(51) Int. Cl.: B32B 17/10, B32B 31/00, B32B 31/30, C03C 27/12

(54) **Procédé de fabrication d'une vitre de verre feuilleté destinée aux véhicules automobiles et capable de réfléchir les rayonnements infrarouges**
Verfahren zur Herstellung von einer PKW Verbundglassscheibe, die Infrarotstrahlung reflektieren kann
Process for making a laminated car window, capable of reflecting infrared rays

(30) Priorité: 03.02.1995 DE 19503510
(43) Date de publication de la demande: 07.08.1996
(73) Titulaire: SAINT-GOBAIN VITRAGE, 92400 Courbevoie (FR)
(72) Inventeur: Roth, Rainer, D-52396 Heimbach (DE); Kötte, Rolf, D-52477 Alsdorf-Begau (DE); Cornils, Gerd, D-52399 Merzenich-Girbelsrath (DE); Krämling, Franz, D-52072 Aachen (DE); von Alpen, Ulrich, B-4700 Eupen (BE)
(74) Mandataire: Muller, René

(56) Documents cités:
- DE-A- 2 344 616
- DE-C- 4 232 554
- US-A- 1 992 997

## Description

L'invention a trait à un procédé de fabrication d'une vitre de verre feuilleté, destinée en particulier aux véhicules automobiles, réfléchissant les infrarouges et pourvue d'une couche de scellement des bords, la vitre comprenant au moins deux feuilles de verre et un stratifié placé entre ces dernières, ce stratifié comportant une feuille porteuse pourvue d'au moins une couche réfléchissant les infrarouges, faite par exemple d'un métal tel que l'argent, et des couches extérieures faites d'un polymère thermoplastique.

Un procédé de fabrication d'une vitre de verre feuilleté réfléchissant les infrarouges, utilisant un stratifié multicouche contenant une couche métallique responsable de la réflexion des infrarouges, ainsi qu'un scellement disposé sur les bords, afin de protéger la couche métallique, a déjà été évoqué dans le brevet EP-A2-0 391 165, en liaison avec le brevet US-PS 4 368 945. Pour ce qui est de la couche métallique réfléchissant les infrarouges, on utilise notamment de l'argent. En ce qui concerne ce procédé connu, on fabrique la vitre de verre feuilleté selon le processus habituel, à partir du stratifié et des deux feuilles de verre, le stratifié s'étendant jusqu'aux bords de la vitre de verre feuilleté. Le scellement s'effectue ici par le dépôt, sur la «tranche» (c'est-à-dire le chant) de la vitre de verre feuilleté définitive, d'un produit adhésif d'étanchéité. Pour former cette couche adhésive de scellement des bords, on utilise des matières adhésives thermoplastiques à base de copolymères de polybutène, des colles à base de polymères du fluor, ou des colles à base de butyle.

Ce procédé connu est certes adapté à la fabrication de vitres fixes d'automobiles (c'est-à-dire de vitres montées de manière fixe dans les cadres qui les entourent et dont les bords sont recouverts, puisqu'elles sont insérées dans les cadres) mais il ne convient pas toujours, par exemple pour fabriquer des vitres latérales escamotables. En effet, comme les tranches des vitres latérales escamotables sont exposées lorsque la fenêtre est ouverte, les matières adhésives sont non seulement visibles, mais sont également soumises à des contraintes mécaniques qui risquent de provoquer la destruction du scellement des bords.

Le brevet DE-A1 23 44 616 évoque le moyen permettant, pour la fabrication de pare-brise pourvus d'un chauffage électrique et constitués de verre feuilleté, de joindre une feuille porteuse, faite de polyéthylène-téréphthalate (PET) et pourvue d'une couche conductrice, à deux feuilles de verre, au moyen de feuilles thermoplastiques de polyvinylbutyral, et d'annuler le risque de corrosion des bords en ôtant en partie et ce, dans la région du bord, sur une largeur de 3 à 12 mm, par exemple, le revêtement métallique, présent sur la feuille de PET, qui s'étend elle-même jusqu'au chant des feuilles de verre. Ce retrait partiel de la couche peut s'effectuer au moyen de procédés chimiques ou mécaniques. Dans cette région des bords, dans laquelle on a supprimé la couche, la feuille de polyvinylbutyral est directement jointe à la surface de la feuille de PET et joue ainsi le rôle nécessaire de scellement.

On sait également qu'il est possible, afin d'empêcher la corrosion de la couche d'argent, d'utiliser une feuille porteuse pourvue d'un revêtement et possédant des dimensions inférieures à celles des feuilles de verre, d'enrober cette feuille porteuse entre deux feuilles thermoplastiques, dont les dimensions correspondraient à celles des feuilles de verre, puis d'assembler les feuilles de façon à ce que les bords de la feuille porteuse dotée du revêtement soient en retrait d'au moins 3 mm par rapport aux bords des feuilles de verre (US-PS 3 794 809).

Le polymère des feuilles thermoplastiques enrobant la feuille porteuse est ensuite réticulé au moyen d'un procédé thermique et de surpression, de façon à assurer le rôle de scellement recherché.

Les deux procédés décrits ci-dessus sont bien entendu efficaces, mais ils exigent que l'on utilise des feuilles porteuses munies d'un revêtement, dont au moins la face enduite de ce revêtement est libre d'accès, ces feuilles porteuses devant alors recevoir au minimum une feuille supplémentaire, à savoir une feuille thermoplastique, constituée par exemple de polyvinylbutyral. Or, les feuilles porteuses dotées d'une couche accessible présentent un inconvénient déterminant. En effet, la couche superficielle sensible ne se trouve pas protégée lors des manipulations nécessaires de la feuille porteuse dotée du revêtement, si bien qu'il y a risque d'abîmer et/ou de salir cette couche superficielle. De tels défauts seraient malheureusement visibles sur la vitre de verre feuilleté, une fois terminée.

L'invention a pour objectif de concevoir un procédé de fabrication d'une vitre (ou «vitrage») de verre feuilleté réfléchissant les infrarouges et pourvue d'un scellement des bords, ce procédé étant, d'une part, adapté à la production industrielle et permettant, d'autre part, d'assurer un scellement efficace et durable de la zone des bords de la vitre de verre feuilleté, sans pour autant que la couche de scellement soit source de problèmes, notamment d'un point de vue optique.

Le procédé conforme à l'invention implique l'utilisation d'un stratifié comprenant une feuille porteuse, pourvue, sur au moins une de ses faces, d'au moins une couche réfléchissant les infrarouges, ce stratifié comprenant également des couches extérieures à base de polymère(s) thermoplastique(s), le procédé selon l'invention comportant les étapes suivantes :
a) on découpe à partir du stratifié une plaque correspondant à la forme géométrique des feuilles de verre, mais plus courte, par exemple de 1 à 10 mm environ, le long des bords qu'il faudra sceller ;
b) la plaque de stratifié est positionnée par rapport aux feuilles de verre en respectant l'espace de décalage déterminé sur les bords, puis on fabrique un feuilleté préparatoire (ou «préliminaire») à partir de l'ensemble des couches, en évacuant l'air entre les couches et en formant un assemblage ou collage provisoire, et ce, par laminage ou par un procédé à basse pression ;
c) l'interstice (ou «fente» ou «rainure») de bord restant sur le feuilleté préliminaire est rempli par injection d'une matière fondue à base de polymère(s) compatible(s) avec le(s) polymère(s) thermoplastique(s) formant déjà les couches extérieures du stratifié ;
d) le(s) polymère(s) injecté(s) dans l'interstice de bord fusionne(nt) avec le(s) polymère(s) des couches extérieures du stratifié et ce, au moyen d'un procédé d'autoclavage mettant en jeu chaleur et surpression. On obtient ainsi le feuilleté définitif.

Par «polymère(s) compatible(s) avec le(s) polymère(s) thermoplastique(s) formant les couches extérieures» on entend un(des) polymère(s) susceptible(s) de fusionner avec le(s) polymère(s) thermoplastique(s) des couches extérieures, notamment un(des) polymère(s) de même composition de base que le(s) polymère(s) des couches extérieures et comprenant ou non un ou plusieurs additifs (par exemple un ou des agents d'adhérence). De la façon la plus simple, le(s) polymère(s) injecté(s) est(sont) identique(s) au(x) polymère(s) formant les couches extérieures.

Le procédé selon l'invention n'exige aucune mesure de sécurité particulière pour protéger la couche superficielle lors de la fabrication de la vitre de verre feuilleté, car cette couche superficielle est totalement recouverte par la couche thermoplastique extérieure. On a en outre pu constater que le scellement des bords de la vitre de verre feuilleté est en pratique invisible, le produit adhésif d'étanchéité utilisé pour le scellement présentant, de préférence, le même aspect et le même indice de réfraction que les couches thermoplastiques voisines et se confondant complètement avec ces couches, sans laisser apparaître de ligne séparatrice visible. Si l'apparence d'une vitre de verre feuilleté fabriquée conformément à l'invention correspond à celle d'une vitre du même type conçue en conformité avec le procédé décrit dans le brevet US-PS 3 794 809, ce nouveau procédé offre pour la production industrielle un avantage essentiel. En effet, la couche superficielle sensible est recouverte et une seule feuille, à savoir le stratifié déjà fabriqué, est nécessaire lors du processus de création du feuilleté.

La procédure de scellement peut être facilement automatisée en utilisant des procédés connus, comme exemplifié ultérieurement.

Les polyuréthanes thermoplastiques, tels qu'ils sont actuellement vendus et utilisés pour fabriquer les vitres de verre feuilleté, par exemple afin de joindre aux feuilles de verre les plaques ou feuilles de polycarbonate, sont des exemples de polymères thermoplastiques adaptés à la production des couches extérieures du stratifié et à l'injection dans l'interstice de bordure. Néanmoins, pour des raisons économiques, on leur préfère le polyvinylbutyral, que l'on utilise dans une large mesure pour façonner la ou les couche(s) thermoplastique(s) intermédiaire(s) lors de la fabrication de verres feuilletés. On a pu constater que l'on pouvait sans problème faire fondre le polyvinylbutyral courant pour l'injecter dans l'interstice de bord. Dans ce cas, il suffit simplement de veiller à ce que l'on ne dépasse pas une température de 230°C lors du chauffage et de l'injection et d'empêcher autant que possible que de l'air ou de l'oxygène pénètre dans le polyvinylbutyral fondu, ce qui risquerait de provoquer une coloration du polymère.

La composition du polyvinylbutyral utilisé habituellement pour fabriquer du verre feuilleté est telle que l'adhérence sur le verre ne dépasse pas un certain plafond. En effet, si l'adhérence devenait trop forte, les caractéristiques de sécurité de la vitre de verre feuilleté se dégraderaient. Comme ce facteur ne joue aucun rôle dans la région des bords de la vitre de verre feuilleté et comme, d'autre part, il peut être avantageux que le polyvinylbutyral adhère correctement au verre, afin de permettre un scellement particulièrement efficace dans la région de l'interstice de bord, il est possible, dans le cadre d'un perfectionnement adapté de l'invention, d'ajouter au(x) polymère(s) thermoplastique(s) choisi(s) pour l'injection dans l'interstice un additif améliorant l'adhérence, du silane par exemple.

D'autres avantages et caractéristiques de l'invention apparaîtront à la lumière des exemples suivants, illustratifs mais non exhaustifs, d'un mode intéressant de réalisation de l'invention, la description faisant référence aux figures dans lesquelles :
- la figure 1 représente les différentes couches de la vitre de verre feuilleté, telles qu'on les observe lors du processus d'assemblage,
- la figure 2 représente une vue de la région des bords du feuilleté préliminaire, pendant l'injection dans l'interstice,
- la figure 3 représente un dispositif automatique permettant d'injecter le matériau dans l'interstice.

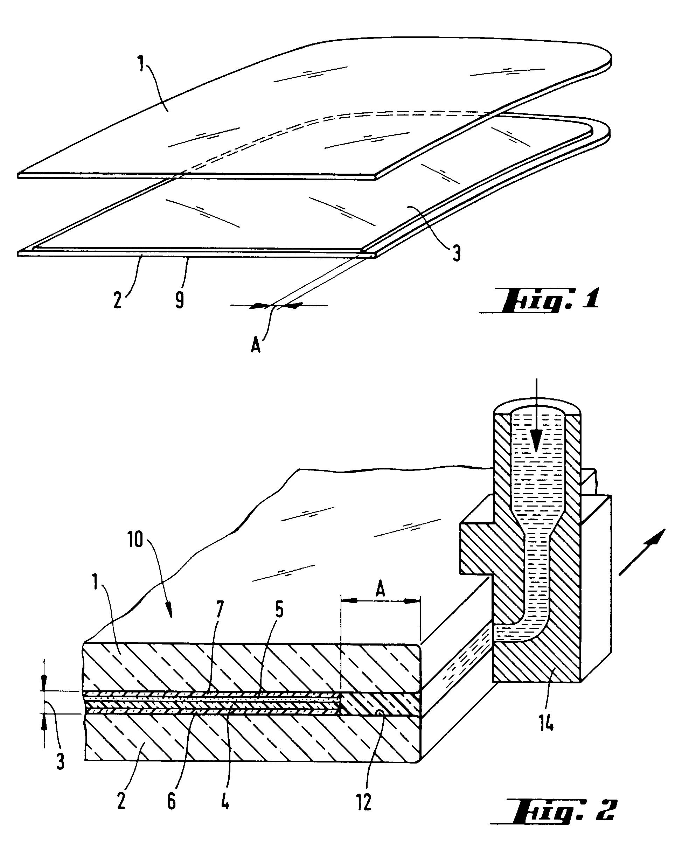

La vitre de verre feuilleté se compose de deux feuilles de verre 1 et 2, épaisses chacune d'un à 4 mm, entre lesquelles a été placé un stratifié 3. Ce stratifié 3, dont la structure est représentée sur la figure 2, comporte pour sa part une feuille porteuse 4 faite, par exemple, de polyéthylène-téréphtalate (PET), épaisse, par exemple, de 0,02 à 0,1 mm, et qui est pourvue sur l'une de ses faces d'une couche superficielle 5 capable de réfléchir la chaleur, le stratifié comportant également deux couches extérieures 6 et 7 faites, par exemple, de polyvinylbutyral et présentant chacune, par exemple, une épaisseur d'environ 0,4 mm. La couche superficielle 5, capable de réfléchir la chaleur, peut être faite de plusieurs sous-couches, la couche véritablement utile faite, par exemple, d'argent, épaisse par exemple de 8 à 15 nm, étant recouverte de part et d'autre par les autres couches généralement faites de métal et/ou d'alliages ou de combinaisons de métaux. Au lieu d'une seule couche d'argent, la couche 5 peut contenir deux voire, le cas échéant, plus de deux couches d'argent proportionnellement plus minces et qui seraient séparées l'une de l'autre par des couches d'alliages métalliques diélectriques.

La structure du stratifié peut également être conçue de façon qu'une feuille de PET pourvue d'un revêtement soit jointe à une autre feuille de PET similaire, mais dépourvue de revêtement, sur le côté, par exemple, du revêtement et ce, au moyen d'une couche adhésive, l'assemblage obtenu étant pourvu d'un côté comme de l'autre d'une couche extérieure faite d'un polymère thermoplastique, de polyvinylbutyral, par exemple.

C'est dans ce but que les stratifiés appropriés sont décrits dans les brevets US-PS 4 368 945, EP 0 303 586 et EP 0 303 587, par exemple. Les stratifiés de ce type sont produits par les fabricants sous forme de bandes ou rubans de feuilles, selon un procédé continu, et livrés sous forme de rouleaux.

Comme on peut le voir en figure 1, les deux feuilles de verre 1 et 2 ont déjà avant leur assemblage leur forme et taille définitives, comme cela est nécessaire et courant dans la fabrication du verre feuilleté. Lorsque l'on veut produire un verre feuilleté et bombé, ces deux feuilles 1 et 2 sont elles-mêmes bombées et, le cas échéant, plus ou moins trempées, afin de leur donner une résistance mécanique plus forte et/ou les caractéristiques d'un verre de sécurité.

Une forme 3 est découpée dans le stratifié existant, suivant les contours des deux feuilles de verre 1 et 2, ceux de ses bords censés recevoir le scellement étant plus courts de quelques millimètres que ceux des deux feuilles de verre, si bien que le bord de la forme 3 est en retrait d'une distance A par rapport aux bords des feuilles 1 et 2. Cette largeur A sera de préférence comprise entre 3 et 6 mm. Comme il s'agit, pour la vitre de verre feuilleté représentée ici, d'une vitre latérale escamotable et pour laquelle la région de bordure inférieure est dissimulée et insérée dans la portière, il n'est pas indispensable de sceller le bord inférieur correspondant 9 de la vitre de verre feuilleté, si bien que dans cette zone, la plaque 3 de stratifié peut rejoindre les bords des feuilles 1 et 2.

Les feuilles de verre 1 et 2, ainsi que la forme 3 découpée dans le stratifié sont assemblées, dans l'ordre souhaité, en un ensemble de couches, comme le montre la figure 1.

Un feuilleté préliminaire est ensuite fabriqué à partir de cet ensemble de couches, comme on sait le faire habituellement pour produire du verre feuilleté. Le procédé de fabrication de ce feuilleté préliminaire peut par exemple comporter les étapes suivantes : l'ensemble des couches est porté à une température de 80 à 90°C, puis laminé au moyen de deux cylindres, l'air présent entre les couches étant ainsi expulsé, permettant un assemblage (ou collage) provisoire des couches. La fabrication du verre feuilleté préliminaire peut également consister en un procédé sous vide, l'air entre les couches étant aspiré, l'assemblage provisoire étant là encore obtenu par un échauffement de l'ensemble des couches à une température allant jusqu'à 70-100°C.

Le feuilleté préliminaire 10 ainsi obtenu présente un interstice 12 sur sa tranche. C'est dans cet interstice 12 que l'on injecte à présent le polyvinylbutyral fondu auquel, éventuellement, on a ajouté un agent d'adhérence. Notons qu'il peut être conseillé que le feuilleté préliminaire soit porté lors de cette injection à une température de 70-120°C, par exemple. A cet effet, il est possible de préchauffer le feuilleté préliminaire immédiatement avant l'injection dans l'interstice, ou bien d'injecter directement après le processus de jonction préparatoire, tant que le feuilleté préliminaire présente une température élevée. Ajoutons finalement que l'on peut aussi bien effectuer l'injection dans l'interstice de bord à température ambiante.

Cette injection dans l'interstice 12 se fait automatiquement à l'aide d'une buse d'injection 14, qu'un robot déplace le long du bord de la vitre de verre feuilleté 10.

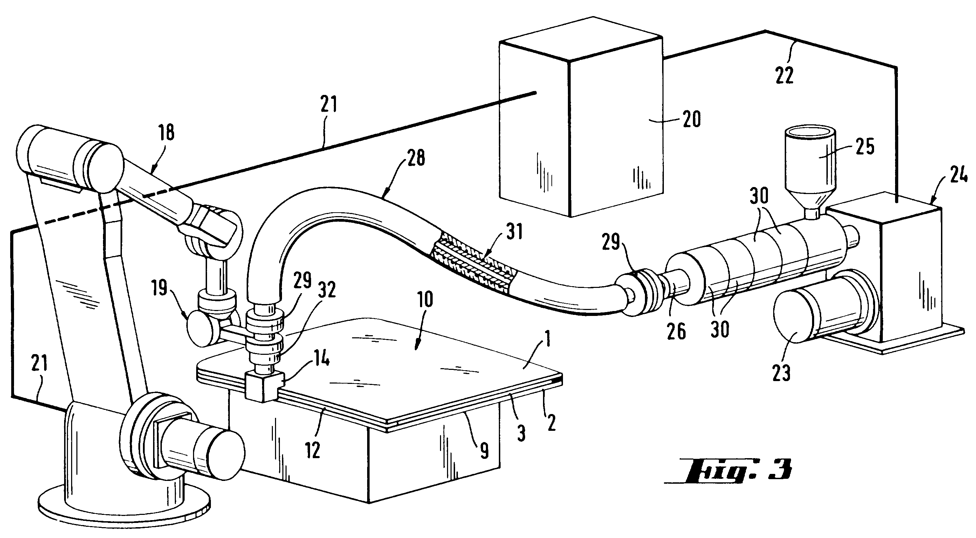

Un dispositif conçu à cet effet est représenté en figure 3.

Ce dispositif comprend un robot 18, sur la tête de manipulation 19 duquel est placée la buse d'injection 14. Cette buse d'injection 14 est appliquée contre la tranche du feuilleté préliminaire 10 par le robot 18, qui la déplace le long de cette tranche en la maintenant bien en contact avec elle. Le programme de télécommande de la buse d'injection 14 est stocké dans la mémoire d'une unité centrale de contrôle 20 qui, pour sa part, commande le robot 18 via la ligne pilote 21. De même, le moteur 23 de l'extrudeuse 24 est contrôlé par l'unité centrale 20 via la ligne pilote 22. Dans l'extrudeuse 24, les granulés de polyvinylbutyral, qui peuvent être par exemple des chutes broyées de feuilles de PVB courantes, sont introduits dans la trémie d'alimentation 25. Cette extrudeuse peut être dotée d'une vis sans fin. Le cylindre 26 qui contient la vis sans fin de l'extrudeuse est relié à la buse d'injection 14 par un tuyau flexible de pression 28, une articulation pivotante 29 étant raccordée aux deux extrémités de ce tuyau, afin de ne pas lui transmettre les forces de torsions dues à la rotation de la buse d'injection 14.

Des anneaux chauffants 30 ont été disposés sur le cylindre 26 de l'extrudeuse 24, anneaux qui portent l'extrudeuse à la température de 180°C, nécessaire pour faire fondre le polyvinylbutyral. De même, le tuyau 28 est équipé de résistances chauffantes 31 et la buse d'injection 14 d'une résistance semblable 32, celles-ci assurant le maintien du PVB à une température stable pendant toute l'opération, température à laquelle la masse de polymère fondu présente une viscosité suffisamment basse pour lui permettre de remplir complètement l'interstice 12.

Bien entendu, il est possible d'effectuer d'une autre façon le scellement par injection dans l'interstice, par exemple à l'aide d'un dispositif qui permet au feuilleté préliminaire de se déplacer devant une buse fixe ou au moyen d'une buse d'injection qui serait déplacée à la main le long des bords du feuilleté préliminaire.

Après avoir rempli de cette manière l'interstice avec du polyvinylbutyral, on va soumettre le feuilleté préliminaire au procédé d'autoclavage habituel, à une température de 140°C et à une pression de 10 bars. Lors de ce traitement, le polyvinylbutyral injecté dans l'interstice de bordure et celui des couches extérieures du stratifié se fondent l'un en l'autre pour former une couche totalement homogène et exempte d'imperfection. La ligne de séparation de la couche porteuse, pourvue d'un revêtement, est certes encore visible si on l'examine attentivement et dans certaines conditions d'éclairage, mais elle est si discrète qu'elle ne nuit en rien à l'aspect ou aux qualités optiques de la vitre.

## Revendications

1. Procédé de fabrication d'une vitre de verre feuilleté dotée d'un scellement des bords, cette vitre comprenant au moins deux feuilles de verre et un stratifié disposé entre elles, ce stratifié comportant au moins une feuille principale porteuse pourvue, sur au moins une de ses faces, d'au moins une couche réfléchissant les infrarouges et comportant des couches extérieures à base de polymère(s) thermoplastique(s), ce procédé présentant les étapes suivantes :
a) on découpe à partir du stratifié une plaque correspondant à la forme géométrique des feuilles de verre, mais plus courte le long des bords qu'il faudra sceller ;
b) la plaque de stratifié est positionnée par rapport aux feuilles de verre en respectant l'espace de décalage déterminé sur les bords, puis on fabrique un feuilleté préliminaire à partir de l'ensemble des couches, en évacuant l'air entre les couches et en formant un assemblage provisoire ;
c) l'interstice de bord restant sur le feuilleté préliminaire est rempli par injection d'une matière fondue à base de polymère(s) compatible(s) avec le(s) polymère(s) thermoplastique(s) formant déjà les couches extérieures du stratifié ;
d) le(s) polymère(s) injecté(s) dans l'interstice de bord fusionne(nt) avec le(s) polymère(s) des couches extérieures du stratifié sous l'action de la chaleur et de la pression.

2. Procédé selon la revendication 1, caractérisé en ce qu'on utilise un stratifié doté de couches extérieures faites de polyvinylbutyral thermoplastique, et en ce que l'interstice de bord est rempli d'une matière fondue constituée du même polyvinylbutyral.

3. Procédé selon la revendication 2, caractérisé en ce qu'un agent d'adhérence est ajouté au polyvinylbutyral utilisé pour remplir l'interstice de bord.

4. Procédé selon l'une quelconque des revendications 1 à 3, caractérisé en ce que le feuilleté préliminaire est porté à une température élevée lors de l'injection du polymère thermoplastique dans l'interstice de bord.

5. Procédé selon l'une quelconque des revendications 1 à 4, caractérisé en ce que l'interstice de bord est rempli à l'aide d'une buse d'extrusion déplacée par un robot télécommandé.

6. Procédé selon l'une quelconque des revendications 1 à 4 , caractérisé en ce que l'on remplit l'interstice de bord en déplaçant le feuilleté préliminaire devant une buse d'extrusion fixe.

## Claims

1. Process for the production of a laminated glass glazing with sealing of the edges, said glazing comprising at least two glass sheets and a laminate placed between them, said laminate incorporating at least one main, carrier sheet on at least one of its faces, at least one infrared reflecting layer and having external layers based on thermoplastic polymer or polymers, said process having the following stages:
a) from said laminate is cut a plate corresponding to the geometrical shape of the glass sheets, but shorter along the edges to be sealed,
b) the laminate plate is positioned with respect to the glass sheets whilst respecting the specific offset space on the edges, followed by the production of a preliminary laminate based on the assembly of the layers, whilst evacuating the air between the layers and forming a provisional assembly,
c) the edge gap remaining on the preliminary laminate is filled by the injection of a molten material based on compatible polymer or polymers with the thermoplastic polymer or polymers already forming the external layers of the laminate,
d) the polymer or polymers injected into the edge gap melt with the polymer or polymers of the external layers of the laminate under the action of heat and pressure.

2. Process according to claim 1, characterized in that use is made of a laminate having external layers formed from thermoplastic polyvinyl butyral and in that the edge gap is filled with a molten material constituted by the same polyvinyl butyral.

3. Process according to claim 2, characterized in that an adhesive agent is added to the polyvinyl butyral used for filling the edge gap.

4. Process according to any one of the claims 1 to 3, characterized in that the preliminary laminate is raised to a high temperature during the injection of the thermoplastic polymer into the edge gap.

5. Process according to any one of the claims 1 to 4, characterized in that the edge gap is filled with the aid of an extrusion nozzle moved by a remotely controlled robot.

6. Process according to any one of the claims 1 to 4, characterized in that the edge gap is filled by moving the preliminary laminate in front of a fixed extrusion nozzle.

## Patentansprüche

1. Verfahren zum Herstellen einer Verbundglasscheibe mit einer Randversiegelung, wobei diese Scheibe mindestens zwei Glasscheiben und ein dazwischen angeordnetes Laminat umfaßt, welches mindestens eine auf wenigstens einer ihrer Flächen mit mindestens einer infrarotreflektierenden Schicht versehene Haupträgertfolie und äußere Schichten auf Basis von thermoplastischen Polymeren umfaßt, wobei dieses Verfahren folgende Schritte aufweist :
a) aus dem Laminat wird ein der geometrischen Flächenform der Glasscheiben entsprechendes, jedoch entlang des zu versiegelnden Randes um 1 bis 10 mm kleineres Flächenstück geschnitten,
b) unter Einhaltung des gewählten Randabstandes wird das Flächenstück des Laminats mit den beiden Glasscheiben zusammengelegt, und aus dem Schichtenpaket wird ein Vorverbund hergestellt, indem die Luft zwischen den Schichten entfernt und eine vorläufige Verbindung hergestellt wird,
c) der verbleibende Randspalt des Vorverbundes wird durch Einspritzen einer Schmelze eines mit dem die Deckschichten des Laminats bildenden thermoplastischen Polymers verträglichen thermoplastischen Polymers ausgefüllt,
d) unter der Wirkung von Wärme und Druck wird das in den Randspalt eingespritzte Polymer mit dem Polymer der äußeren Schichten des Laminats verschmolzen.

2. Verfahren nach Anspruch 1, **dadurch gekennzeichnet**, daß ein Laminat mit Deckschichten aus thermoplastischem Polyvinylbutyral verwendet und der Randspalt mit einer Schmelze des gleichen Polyvinylbutyrals ausgefüllt wird.

3. Verfahren nach Anspruch 2, **dadurch gekennzeichnet**, daß dem zum Ausfüllen des Randspalts verwendeten Polyvinylbutyral ein Haftvermittler zugesetzt wird.

4. Verfahren nach einem der Ansprüche 1 bis 3, **dadurch gekennzeichnet**, daß der Vorverbund beim Einspritzen des thermoplastischen Polymers in den Randspalt auf eine erhöhte Temperatur aufgeheizt wird.

5. Verfahren nach einem der Ansprüche 1 bis 4, **dadurch gekennzeichnet**, daß der Randspalt mit Hilfe einer von einem ferngesteuerten Roboter geführten Extrusionsdüse ausgefüllt wird.

6. Verfahren nach einem der Ansprüche 1 bis 4, **dadurch gekennzeichnet**, daß der Randspalt durch Vorbeiführen des Vorverbundes an einer ortsfest angeordneten Extrusionsdüse ausgefüllt wird.
